**Europäisches Patentamt**

**European Patent Office**

**Office européen des brevets**

(19)

(11) Veröffentlichungsnummer: **0 311 958 B'**

(12)

# EUROPÄISCHE PATENTSCHRIFT

(45) Veröffentlichungstag der Patentschrift:
**04.09.91 Patentblatt 91/36**

(51) Int. Cl.⁵: **D01H 9/18**, B65G 9/00

(21) Anmeldenummer: **88116799.3**

(22) Anmeldetag: **10.10.88**

(54) **Weichenanordnung.**

(30) Priorität: **12.10.87 DE 3734506**

(43) Veröffentlichungstag der Anmeldung:
**19.04.89 Patentblatt 89/16**

(45) Bekanntmachung des Hinweises auf die
Patenterteilung:
**04.09.91 Patentblatt 91/36**

(84) Benannte Vertragsstaaten:
**CH DE ES FR GB IT LI**

(56) Entgegenhaltungen:
**FR-A- 2 187 959**

(73) Patentinhaber: **VEIT TRANSPO GMBH
Rudolf-Diesel-Strasse 3
W-8910 Landsberg/Lech (DE)**

(72) Erfinder: **Lötzer, Karl
Pilgersheimer Strasse 51
W-8000 München 90 (DE)**

(74) Vertreter: **Patentanwälte Grünecker,
Kinkeldey, Stockmair & Partner
Maximilianstrasse 58
W-8000 München 22 (DE)**

## Beschreibung

Die Erfindung bezieht sich auf eine Weichenanordnung der im Oberbegriff von Anspruch 1 erläuterten Art.

Eine derartige Weichenanordnung ist durch offenkundige Vorbenutzung bekannt. Die vorbenutzte Weichenanordnung wird für ein Hängefördersystem in einem Spinnereibetrieb verwendet, mit dem Spulen vom Flyer zur Ringspinnmaschine transportiert werden. Da die Ringspinnmaschine eine wesentlich größere Spulenkapazität aufweist als der Flyer, ist es notwendig, die vom Flyer kommenden Förderzüge mit den Spulen zunächst zwischenzulagern und danach in der erforderlichen Länge zusammenzustellen. Zu diesem Zweck werden in der vom Flyer kommenden Hauptstrecke eine Vielzahl von Weichenzungen eingebaut, wobei jede Weichenzunge eine Verbindung von einem ersten Anschluß an der Hauptstrecke zu einem zweiten Anschluß an einer Speicherstrecke herstellen kann. Die Weichenzungen sind in den Zwischenräumen zwischen dem ersten und dem zweiten Anschluß schwenkbar jedoch ortsfest angeordnet. Jede der Speicherstrecken wird an ihrem Ende über eine weitere Weiche mit einer zweiten Hauptstrecke verbunden, die zur Ringspinnmaschine führt. Diese konstruktive Ausgestaltung ist jedoch ersichtlich äußerst kompliziert, da in der Hauptstrecke die gleiche Anzahl Weichen vorgesehen werden muß, wie Speicherstrecken vorhanden sind. Die Weichen benötigen darüber hinaus Kurvenradien bestimmter Mindestgrößen und einen Minimalabstand für ihre Verschwenkbarkeit. Dadurch kann jedoch der Abstand zwischen den Speicherstrecken nicht so klein gehalten werden, wie es in Hinblick auf eine optimale Platzausnutzung des Speicherraums notwendig wäre. Darüber hinaus ist der Zwischenraum zwischen den ersten und den zugeordneten zweiten Anschlüssen durch die ortsfest installierten Weichenzungen und ihre Verstellmechanismen blockiert, so daß es äußerst schwierig ist, in diesem Bereich ein weiteres Hängefördersystem zum Heranführen zusätzlich benötigter Arbeitsmittel unterzubringen.

Der Erfindung liegt somit die Aufgabe zugrunde, eine Weichenanordnung aufzuzeigen, mit der auf konstruktiv einfache Weise und ohne größeren Platzbedarf Verbindungen zwischen einer größeren Anzahl von Anschlüssen hergestellt werden können.

Durch den erfindungsgemäßen verfahrbaren Wagen mit den Verbindungsstücken kann der Zwischenraum zwischen dem ersten und den zugeordneten zweiten Anschlüssen auf einfache Weise geräumt werden, wenn ein weiteres Arbeitsmittel hindurchfahren muß. Durch die Zuordnung einer Gruppe zweiter Anschlüsse zu jeweils einer einzigen ersten Anschluß muß darüber hinaus bei der Bestimmung des Abstandes der zweiten Anschlüsse untereinander keine Rücksicht mehr auf einen erforderlichen Mindest-Kurvenradius genommen werden. Die Anzahl der beweglichen Teile und der konstruktive Aufwand wird entscheidend verringert.

Aus der DE-PS 2410408 ist ein Förderwagen für ein Hängefördersystem bekannt, der auf Schienen verfahrbar ist und selbst Schienenstücke trägt. Jedes der Schienenstücke hat zwei freie Enden, die jedoch nur nacheinander mit freien Enden stationärer Schienen fluchtend ausgerichtet werden können. Im Betrieb wird der Förderwagen zunächst derart verfahren, daß ein freies Ende eines seiner Schienenstücke mit einem freien Ende einer stationären Schiene fluchtend ausgerichtet ist. Dadurch können Fördergüter von der stationären Schiene auf den Förderwagen überführt werden. Dann wird der Förderwagen derart verfahren, daß das andere freie Ende mit dem freien Ende einer weiteren stationären Schiene fluchtet, worauf die Fördergüter vom Förderwagen auf die weitere stationäre Schiene überführt werden können. Der Druckschrift ist jedoch kein Hinweis zu entnehmen, daß ein verfahrbarer Wagen eine Weiche ersetzen kann, indem die Schienenstücke erfindungsgemäß angeordnet werden, so daß in jeder wirksamen Stellung des Wagens zwei freie Enden stationärer Schienen miteinander verbunden sind.

Die Ausgestaltung nach Anspruch 2 ist dort bevorzugt, wo es die spezielle Anzahl der zweiten Anschlüsse erlaubt.

Die Ausgestaltung nach Anspruch 3 erlaubt eine einfache und wenig störanfällige Konstruktion des Wagens.

Die Ausgestaltung von Anspruch 4 ist dort vorteilhaft, wo alle zweiten Anschlüsse einer Gruppe über eine einzige Hauptstrecke beliefert werden können.

Soll jedoch jeder der zweiten Anschlüsse über mehrere Hauptstrecken zu beliefern sein, so kann die Ausgestaltung nach Anspruch 5 verwendet werden.

Mit dem gemäß Anspruch 6 ausgebildeten Wagen können erste und zweite Anschlüsse miteinander verbunden sein, die sich mit Abstand gegenüberliegen.

Der nach Anspruch 7 ausgestaltete Wagen wird dort verwendet, wo die ersten Anschlüsse im wesentlichen parallel zu den zweiten Anschlüssen verlaufen.

Ein besonderer Vorteil der erfindungsgemäßen Weichenanordnung ergibt sich aus Anspruch 8. Der Ausgleich von Niveauunterschieden, d.h. die Verbindung von senkrecht übereinanderliegenden Transportebenen, zwischen dem ersten und dem zweiten Anschluß ist mit den bislang verwendeten Weichenzungen kaum oder nur unter konstruktiven Schwierigkeiten zu erreichen.

Durch die Verwendung der erfindungsgemäßen Weichenanordnung können die Abstände zwischen den ersten Anschlüssen derart groß gewählt werden, daß der erste Anschluß gemäß Anspruch 9 über zwei Schienen mit der Hauptstrekke verbunden werden kann. Soll somit ein in einer Richtung auf der Hauptstrecke ankommender Förderzug zunächst in Richtung des zweiten Anschlusses und danach vom zweiten Anschluß wieder auf die Hauptstrecke geleitet und auf der Hauptstrecke in der gleichen Richtung weitergefördert werden, so muß der Zug nicht nochmals unter Änderung seiner Förderrichtung rangiert werden.

Der Antrieb des Wagens über ein Zahnstangengetriebe nach Anspruch 10 erlaubt, insbesondere wenn ein Inkrementalgeber nach Anspruch 11 verwendet wird, bei zweckmäßiger Teilung der Zahnstange eine automatische Steuerung des Wagens derart, daß der Wagen genau an der vorgesehenen Stelle zum Stillstand kommt, an der die gewünschte Verbindung zwischen einem ersten und einem zweiten Anschluß hergestellt werden kann. Dabei kann der Wagen sowohl beim Wechseln der Anschlüsse innerhalb einer Gruppe als auch beim Verbinden eines weiteren ersten Anschlusses mit einem zweiten Anschluß der diesem zugeordneten Gruppe automatisch gesteuert werden.

Von besonderem Vorteil ist die Anwendung der erfindungsgemäßen Weichenanordnung in der in Anspruch 12 beschriebenen Weise in einer Ringspinnmaschine. Wenn das Transportsystem für die Flyer-Spulen in den Arbeitsbereich der Ringspinnmaschine hineingeführt wird, können die Flyer-Spulen direkt von den Förderzügen abgespult werden. Das erspart das zeit- und personalintensive Umhängen der Flyer-Spulen vom Transportsystem in die Ringspinnmaschine hinein. Die Schwierigkeit dabei liegt jedoch darin, daß die Förderschienen in der Ringspinnmaschine einen äußerst geringen Abstand zueinander aufweisen müssen, der mit konventionell verwendeten Weichen nicht zu erreichen ist. Außerdem kann rings um die Ringspinnmaschine eine Stromschiene bzw. Laufschienen für ein Fadenknüpfgerät laufen. Es ist somit nicht zu vermeiden, daß sich die Schienenwege für das Fadenknüpfgerät und die Schienenwege für die Förderzüge der Flyer- Spulen kreuzen. Durch die Verwendung der erfindungsgemäßen Weichenanordnung kann durch Verfahren des Wagens der Zwischenraum zwischen den Anschlüssen geräumt werden, wenn das Fadenknüpfgerät durchlaufen muß.

Ein Ausführungsbeispiel der Erfindung wird nachfolgend anhand der Zeichnungen näher erläutert. Es zeigen :

Fig. 1    eine schematische Darstellung eines Schienen-Transportsystems mit der erfindungsgemäßen Weichenanordnung in einer ersten Stellung des Wagens,

Fig. 2    das Transportsystem aus Fig. 1 mit einer zweiten Stellung des Wagens,

Fig. 3    das Transportsystem nach Fig. 1 mit einer dritten Stellung des Wagens,

Fig. 4    eine Draufsicht auf den Wagen der Weichenanordnung,

Fig. 5    die Seitenansicht von Fig. 4,

Fig. 6    die Vorderansicht von Fig. 4,

Fig. 7    ein weiteres Ausführungsbeispiel eines Schienen-Transportsystems in schematischer Darstellung in einer ersten Stellung eines Wagens,

Fig. 8    das Transportsystem aus Fig. 7 mit einer zweiten Stellung des Wagens,

Fig. 9    ein weiteres Ausführungsbeispiel des Schienen-Transportsystems in schematischer Darstellung,

Fig. 10   ein weiteres Ausführungsbeispiel des Schienen-Transportsystems in schematischer Darstellung zum Überbrücken von Niveauunterschieden,

Fig. 11   ein weiteres Ausführungsbeispiel des Schienen-Transportsystems in schematischer Darstellung zum Überbrücken von Niveauunterschieden, und

Fig. 12   eine schematische Darstellung einer Ringspinnmaschine als bevorzugtes Anwendungsgebiet der Weichenanordnung.

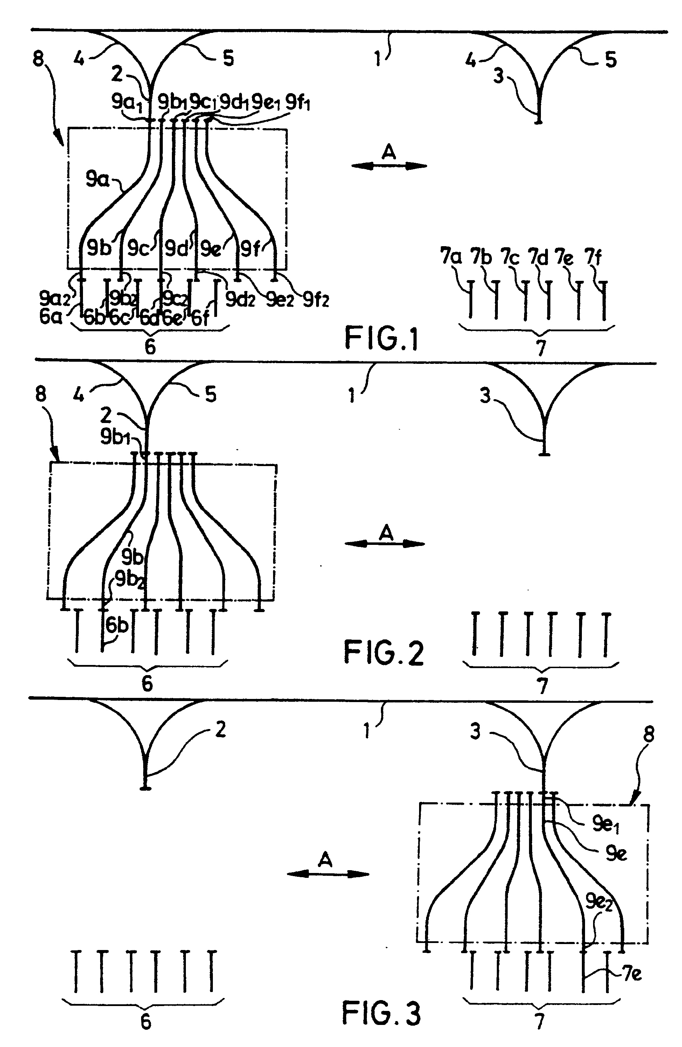

In den Figuren 1 bis 3 ist in schematischer Darstellung ein Schienensystem für einen Hängeförderer ersichtlich. Das Schienensystem weist eine Hauptstrecke 1 auf, von der zwei im wesentlichen senkrecht zur Hauptstrecke 1 verlaufende, erste Anschlüsse 2 und 3 abzweigen. Die Anschlüsse 2 und 3 sind über mit konventionellen Weichen bestückte oder als Weichen ausgebildete Abzweigungen und Einmündungen 4 und 5 derart mit der Hauptstrecke 1 verbunden, daß ein von beiden Richtungen auf der Hauptstrecke 1 ankommender, nicht dargestellter Förderzug ohne Rangieren zu den ersten Anschlüssen 2 und 3 gelangen kann. Jedem der ersten Anschlüsse 2 und 3 liegt mit Zwischenraum jeweils eine Gruppe 6 bzw. 7 zweiter Anschlüsse 6a bis 6f bzw. 7a bis 7f gegenüber. Jede der Gruppen 6 bzw. 7 enthält die gleiche Anzahl, d.h. sechs zweite Anschlüsse. Die zweiten Anschlüsse 6a bis 6f bzw. 7a bis 7f sind innerhalb ihrer Gruppe 6 bzw. 7 und zur benachbarten Gruppe fluchtend ausgerichtet und verlaufen parallel zueinander und parallel zu den ersten Anschlüssen 2 und 3. Der senkrechte Abstand zwischen den ersten Anschlüssen 2 bzw. 3 und der jeweils zugeordneten Gruppe 6 bzw. 7, d.h. der Zwischenraum zwischen den ersten und zweiten Anschlüssen ist gleich. Die Parallelabstände zwischen den einzelnen zweiten Anschlüssen jeder Gruppe können unterschiedlich sein und auf die konstruktiven Gegebenheiten des mit den zweiten Anschlüssen verbundenen Schienensystems abgestimmt werden. Im Zwischenraum zwischen den ersten Anschlüssen 2 bzw. 3 und den Gruppen 6 bzw. 7 der zweiten Anschlüsse ist ein strichpunktiert umrissener Wagen 8 in Richtung des Doppelpfeiles A verfahrbar. Der Wagen 8 trägt eine Mehrzahl von Verbindungsstücken 9a bis 9f, deren Anzahl zweckmäßigerweise der Anzahl der zweiten Anschlüsse jeder Gruppe 6 bzw. 7 entspricht. Jedes Verbindungsstück 9a bis 9f weist jeweils ein erstes freies Ende $9a_1$ bis $9f_1$ und ein zweites freies Ende $9a_2$ bis $9f_2$ auf. Die freien Enden der Verbindungsstücke 9 sind jeweils untereinander fluchtend ausgerichtet und derart angeordnet, daß beim Verfahren des Wagens in Richtung des Pfeiles A jedes der ersten freien Enden $9a_1$ bis $9f_1$ mit den ersten Anschlüssen 2 bzw. 3 in Transportverbindung gebracht werden kann. Die zweiten freien Enden $9a_2$ bis $9f_2$ sind ebenfalls zueinander fluchtend ausgerichtet und derart angeordnet, daß das zweite freie Ende eines Verbindungsstückes dann mit einem zweiten Anschluß in Transportverbindung steht, wenn das erste freie Ende des gleichen Verbindungsstückes mit einem ersten Anschluß fluchtet.

Wie aus den Zeichnungen ersichtlich, können die Abstände der ersten freien Enden untereinander beliebig gewählt werden. Diese Abstände sind zweckmäßigerweise so klein wie möglich, um den Laufweg des Wagens 8 im Bereich eines ersten Anschlusses so klein wie möglich zu halten. Der Abstand zwischen jeweils zwei benachbarten zweiten freien Enden ergibt sich aus dem Abstand zwischen den diesen zweiten freien Enden zugeordneten zweiten Anschlüssen plus dem Abstand der zugeordneten ersten freien Enden.

Wie Fig 1 zeigt, ist die Hauptstrecke 1 über den ersten Anschluß 2, das erste freie Ende $9a_1$ des Verbindungsstückes 9a und dessen zweites freies Ende $9a_2$ mit dem zweiten Anschluß 6a verbunden. Soll eine andere Verbindung hergestellt werden, so wird der Wagen 8 in Richtung des Doppelpfeiles A verschoben. Fig. 2 zeigt eine Stellung, in der der Wagen 8 um einen Schaltschritt nach links verfahren wurde. In dieser Stellung ist die Hauptstrecke 1 über den ersten Anschluß 2, das erste freie Ende $9b_1$ des Verbindungsstückes 9b und dessen zweites freies Ende $9b_2$ mit dem nächstfolgenden zweiten Anschluß 6b verbunden. Auf gleiche Weise kann der erste Anschluß 2 über die weiteren Verbindungsstücke 9c bis 9f mit jedem weiteren zweiten Anschluß 6c bis 6f der Gruppe 6 verbunden werden.

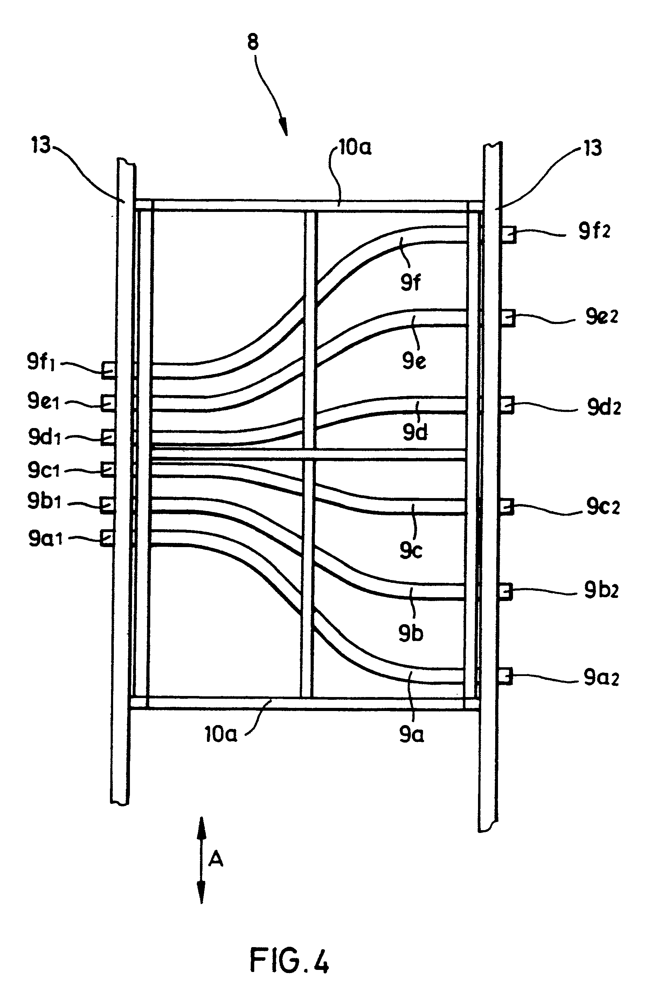

Wird der Wagen 8 in Richtung des Doppelpfeiles A nach rechts verschoben, so kann, wie Fig. 3 zeigt, die Hauptstrecke 1 mit allen zweiten Anschlüssen der Gruppe 7 in der bereits beschriebenen Weise verbunden werden. Im dargestellten Ausführungsbeispiel ist der erste Anschluß 3 über das erste freie Ende $9e_1$ des Verbindungsstückes 9e und dessen zweites freies Ende $9e_2$ mit dem zweiten Anschluß 7e verbunden. Auch hier kann wieder durch zweckmäßiges Verfahren des Wagens 8 jeder der zweiten Anschlüsse 7a bis 7f über das jeweils zugeordnete Verbindungsstück 9a bis 9f mit dem ersten Anschluß 3 verbunden werden.

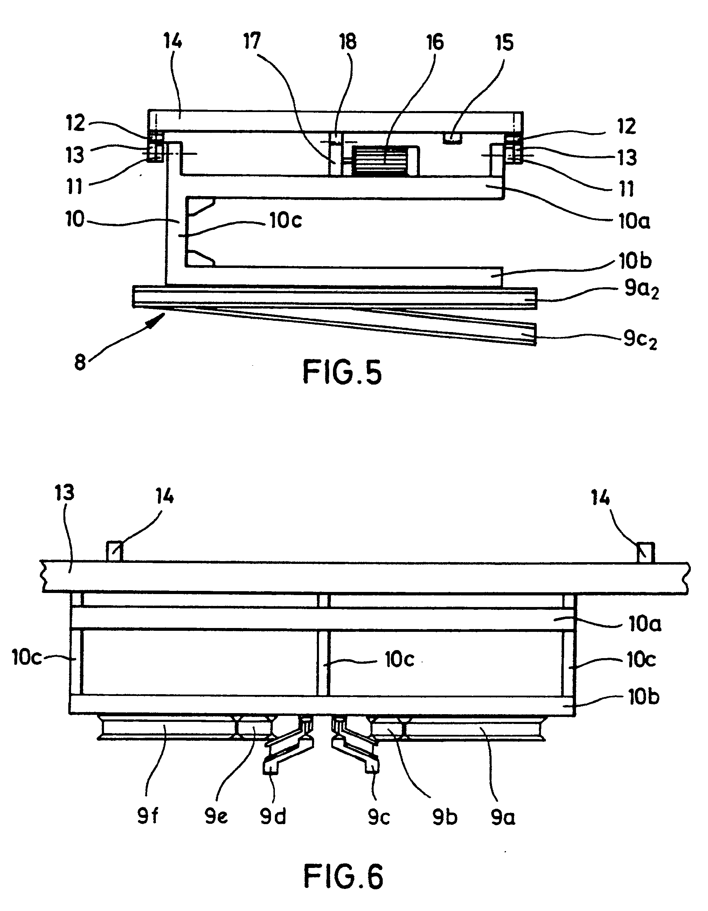

In den Figuren 4 bis 6 ist ein Wagen 8 für ein Hängefördersystem dargestellt. Wie Fig. 5 zeigt, weist der Wagen 8 einen Laufrahmen 10 auf, der aus einem oberen Tragrahmen 10a, einem unteren Tragrahmen 10b und vertikalen Verbindungsstreben 10c besteht, die den oberen und unteren Tragrahmen 10a und 10b zu einem U-förmigen Querschnitt verbinden. Die Länge der senkrechten Streben 10c ist zweckmäßigerweise so gewählt, daß der obere und der untere Tragrahmen 10a bzw. 10b einen Abstand zueinander aufweisen, der es erlaubt, daß der obere Tragrahmen 10a ein sekundäres Fördersystem oder eine Stromschiene über- und der untere Tragrahmen 10b diese Schiene untergreifen kann. Damit wird auf einfache Weise eine Kreuzungsmöglichkeit für zwei Schienensysteme geschaffen. Am oberen Tragrahmen 10a sind in zweckmäßigen, nicht gezeichneten Lagerungen Laufrollen 11 und Führungsrollen 12 gelagert, die in parallel verlaufenden Laufprofilen 13 abrollen und abgestützt sind. Die Laufprofile 13 sind in üblicher Weise an einem Träger 14 derart befestigt, daß eine saubere geradlinige Führung des Wagens 8 bei seiner Bewegung entlang des Doppelpfeiles A erreicht wird. Am Träger 14 ist weiterhin eine Stromschiene 15 für einen Antriebsmotor 16 befestigt. Der Antriebsmotor 16 betreibt ein Zahnritzel 17, das in einer parallel zu den Laufprofilen 13 verlaufenden Zahnstange 18 abrollt. Der Antriebsmotor 16 wird zweckmäßigerweise über einen nicht dargestellten Inkrementalgeber gesteuert, durch den auch eine Verstellbewegung über einen halben bzw. einen viertel Zahn realisiert werden kann. Auf diese Weise ist es möglich, den Wagen 8 automatisch an jede vorherbestimmte Stelle zu verfahren.

Die Verbindungsstücke 9 sind an der Unterseite des unteren Tragrahmens 10b befestigt. Als Verbindungsstücke werden zweckmäßigerweise Stücke der gleichen Schienen verwendet, wie sie auch für die Hauptstrecke 1 bzw. die Anschlüsse 2, 3, 6 und 7 verwendet werden. Wird die in Fig. 6 näher dargestellte Profilschiene verwendet, so kann diese in einfacher Weise derart gebogen werden, daß sich die oben erwähnten Unterschiede in den Abständen der ersten freien Enden zueinander und der zweiten freien Enden zueinander ergeben, und die freien Enden selbst eine geradlinige Fortsetzung der jeweiligen Anschlüsse bilden.

Wie insbesondere in den Fig. 5 und 6 ersichtlich, ist es nicht unbedingt erforderlich, daß die zweiten freien Enden der Verbindungsstücke 9 alle auf dem gleichen Transportniveau liegen. Im dargestellten Ausführungsbeispiel sind die beiden mittleren Verbindungsstücke 9c bzw. 9d nach unten abgebogen, so daß ihre zweiten freien Enden $9c_2$ bzw. $9d_2$ mit nicht dargestellten zweiten Anschlüssen fluchten, die unter dem Niveau der zugeordneten ersten Anschlüsse liegen.

4

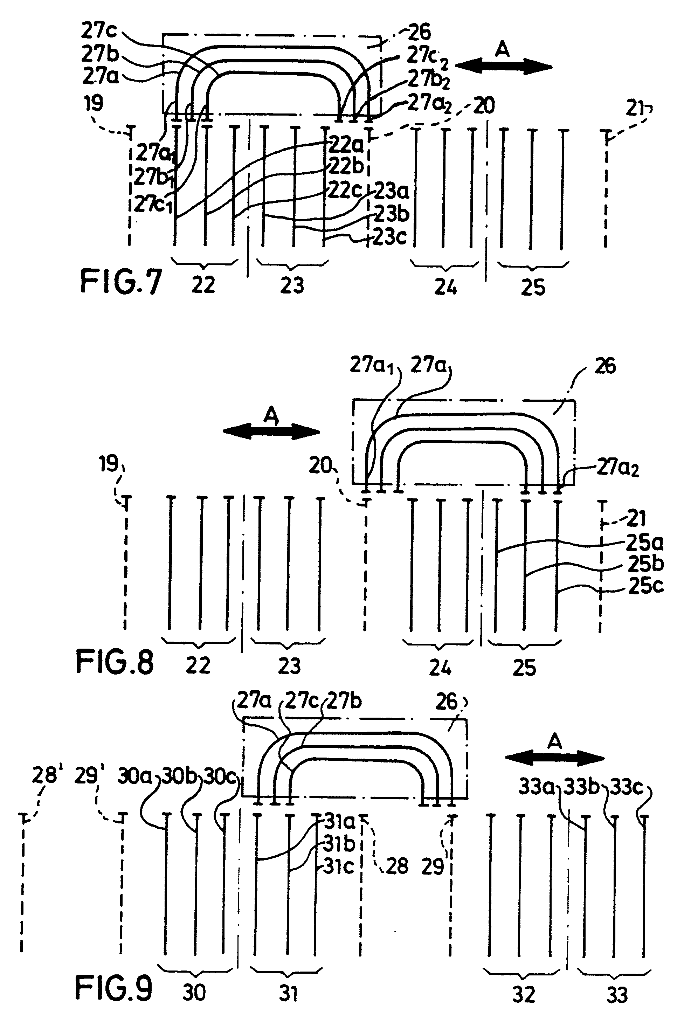

In den Fig. 7 und 8 ist in schematischer Darstellung ein weiteres Ausführungsbeispiel der Weichenanordnung ersichtlich. Zur Verdeutlichung der Darstellung sind erste Anschlüsse 19, 20, 21 gestrichelt dargestellt. Parallel zu den ersten Anschlüssen 19, 20, 21 verlaufen Gruppen 22, 23, 24, 25 zu jeweils drei zweiten Anschlüssen. Zwischen zwei ersten Anschlüssen 19 und 20 bzw. 20 und 21 sind jeweils zwei Gruppen 22, 23 bzw. 24, 25 zweiter Anschlüsse symmetrisch um die strichpunktierte Mittellinie zwischen den beiden ersten Anschlüssen angeordnet. Die freien Enden der ersten Anschlüsse 19, 20, 21 und die freien Enden aller zweiten Anschlüsse jeder Gruppe 22, 23, 24, 25 verlaufen parallel und sind fluchtend und mit Abstand zueinander ausgerichtet. Über diesen Abstand ist ein strichpunktiert umrissener Wagen 26 verfahrbar, der analog dem Wagen 8 konstruiert werden kann. Der Wagen 26 weist drei Verbindungsstücke 27a bis 27c auf, die ebenfalls zum Überbrücken von Niveauunterschieden in geeigneter Weise schräggeführt werden können. Jedes der Verbindungsstücke 27a bis 27c ist derart geformt, daß seine beiden freien Enden $27a_1$ und $27a_2$, $27b_1$ und $27b_2$, $27c_1$ und $27c_2$ im wesentlichen parallel zueinander an der den Anschlüssen zugewandten Seite des Wagens münden. Die Abstände der ersten und zweiten Anschlüsse zueinander sind so gewählt, daß bei einer Verschiebungsbewegung des Wagens 26 mit jedem zweiten Anschluß einer Gruppe 22, 23, 24, 25 mindestens ein erster Anschluß zu verbinden ist. In Fig. 7 ist der Wagen 26 derart verfahren, daß der mittlere der zweiten Anschlüsse 20 dem zweiten freien Ende $27a_2$ des Verbindungsstückes 27a gegenüberliegt, während das erste freie Ende des Verbindungsstückes 27a mit dem ersten der zweiten Anschlüsse 22a der Gruppe 22 fluchtet. Förderzüge können somit von dem mit dem ersten Anschluß 20 verbundenen Schienenstrang über das Verbindungsstück 27a auf den mit dem zweiten Anschluß 22a verbundenen Schienenstrang zurückgefördert werden. Soll beispielsweise der zweite der zweiten Anschlüsse 22b der Gruppe 22 mit dem ersten Anschluß 20 verbunden werden, so wird der Wagen 26 um einen Schaltschritt in Richtung des Doppelpfeiles A nach rechts verschoben, bis das zweite freie Ende $27b_2$ des Verbindungsstückes 27b dem ersten Anschluß 20 gegenüberliegt, wobei das erste freie Ende $27b_1$ mit dem gewünschten zweiten Anschluß 22b fluchtet. Soll beispielsweise der letzte zweite Anschluß 23c der Gruppe 23 beliefert werden, so wird der Wagen 26 so weit in Richtung des Doppelpfeiles A nach links verschoben, bis das erste freie Ende $27a_1$ des Verbindungsstückes 27a mit dem ersten Anschluß 19 fluchtend ausgerichtet ist. In dieser Stellung befindet sich das zweite freie Ende $27a_2$ in Ausrichtung mit dem gewünschten zweiten Anschluß 23c.

Wie Fig. 8 zeigt, ist der erste Anschluß 20 nicht nur den zweiten Anschlüssen der Gruppe 22 sondern auch den zweiten Anschlüssen der Gruppe 25 zugeordnet. In der gezeichneten Stellung des Wagens 26 fluchtet das erste freie Ende 27a des Verbindungsstückes 27 mit dem ersten Anschluß 20 und das zweite freie Ende $27a_2$ mit dem letzten zweiten Anschluß 25c der Gruppe 25. Die anderen zweiten Anschlüsse der Gruppe 25 können analog durch schrittweises Verschieben des Wagens 26 nach links mit dem ersten Anschluß 20 verbunden werden.

Fig. 9 beschreibt ein weiteres Ausführungsbeispiel, bei dem zwei erste Anschlüsse 28 und 29 nebeneinanderliegend angeordnet sind. Beidseitig der ersten Anschlüsse 28, 29 sind jeweils zwei Gruppen 30, 31 bzw. 32, 33 von jeweils drei zweiten Anschlüssen angeordnet. Der Wagen 26 entspricht dem Wagen der Fig. 7 und 8. Wie Fig. 9 zeigt, kann der erste Anschluß 29 mit der Gruppe 31 und zusätzlich, beim Verschieben in Richtung des Doppelpfeiles A nach rechts mit den zweiten Anschlüssen der Gruppe 33 verbunden werden. Der erste Anschluß 28 kann mit allen zweiten Anschlüssen 30a bis 30c der Gruppe 30 und mit allen zweiten Anschlüssen 32a bis 32c der Gruppe 32 verbunden werden. Für den Fall, daß die zweiten Anschlüsse der Gruppen 30 bzw. 31 mit zwei ersten Anschlüssen verbunden werden sollen, können weitere erste Anschlüsse 28', 29' auf der den Anschlüssen 28, 29 gegenüberliegenden Seite der Gruppen 30, 31 angeordnet werden. Dabei kann der Anschluß 28' mit den zweiten Anschlüssen der Gruppe 30 und der erste Anschluß 29' mit den zweiten Anschlüssen der Gruppe 31 verbunden werden.

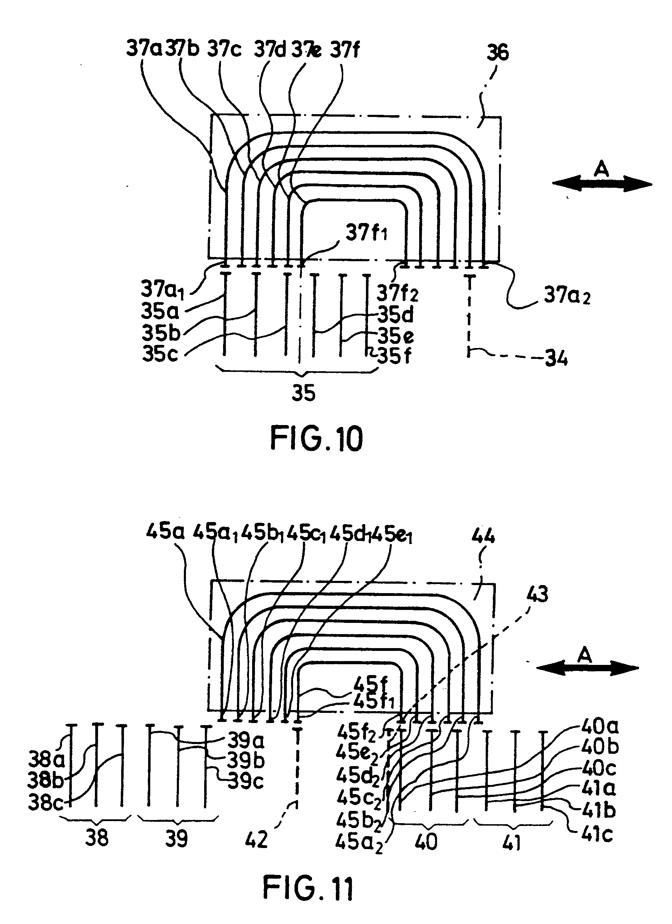

Aus Fig. 10 ist ein Ausführungsbeispiel ersichtlich, mit dem Niveauunterschiede zwischen einem ersten Anschluß 34 und einer Gruppe 35 von sechs zweiten Anschlüssen überbrückt werden können. Jeder zweite Anschluß der Gruppe 35 kann bei diesem Ausführungsbeispiel auf einem zum ersten Anschluß und zu den anderen zweiten Anschlüssen unterschiedlichen Niveau liegen. Zu diesem Zweck ist ein Wagen 36 vorgesehen, auf dem die gleiche Anzahl Verbindungsstücke 37 angeordnet ist, wie zweite Anschlüsse vorhanden sind. Beide freien Enden jedes Verbindungsstückes 37 münden an der gleichen Seite des Wagens 36. Zum Überbrücken der Niveauunterschiede liegen die ersten freien Enden $37a_1$ bis $37f_1$ genau auf der Höhe des diesem Verbindungsstück zugeordneten zweiten Anschlusses 35a bis 35f, während die zweiten freien Enden $37a_2$ bis $37f_2$ auf der Höhe des ersten Anschlusses 34 angeordnet sind. Die Verbindungsstücke 37 sind somit in analoger Weise wie beispielsweise das Verbindungsstück 9c in Fig. 5 schräggeführt. In der in Fig. 10 gezeichneten Stellung des Wagens 36 fluchtet das zweite freie Ende $37a_2$ des Verbindungsstückes 37a mit dem im Niveau höher liegenden ersten Anschluß 34 und das erste freie Ende $37a_1$ des gleichen Verbindungsstückes 37a mit dem im Niveau tiefer liegenden zweiten Anschluß 35a. Wird der Wagen 36 in Richtung des Doppelpfeiles A in Fig. 10 nach rechts verschoben, so werden nacheinander alle zweiten freien Enden der Verbindungsstücke 37 mit dem ersten Anschluß 34 fluchtend ausgerichtet, wodurch in bereits beschriebener Weise das jeweils zugeordnete erste freie Ende des Verbindungsstückes 37 mit dem entsprechenden zweiten Anschluß fluchtet.

Eine zweite Möglichkeit, Niveauunterschiede zu überbrücken, beschreibt Fig. 11. In diesem Ausführungsbeispiel sind zwei erste Anschlüsse 42 und 43 asymmetrisch zwischen jeweils zwei Gruppen 38, 39 bzw. 40, 41 von jeweils drei zweiten Anschlüssen angeordnet. Der erste Anschluß 42 ist den Gruppen 38 und 40 und der erste Anschluß 43 den Gruppen 39 und 41 zugeordnet. Es ist ein Wagen 44 vorgesehen, der sechs Verbindungsstücke 45a bis 45f aufweist. Die Verbindungsstücke 45a bis 45f sind auf dem Wagen 44 derart geneigt angeordnet, daß die ersten freien Enden $45d_1$, $45e_1$ und $45f_1$ sowie die zweiten freien Enden $45a_2$, $45b_2$ und $45c_2$ jeweils auf dem gemeinsamen Niveau der ersten Anschlüsse 42 und 43 liegen. Die verbleibenden ersten freien Enden $45a_1$, $45b_1$ und $45c_1$ der Verbindungsstücke 45 liegen auf dem gemeinsamen Niveau der zweiten Anschlüsse der Gruppen 38 und 39, das vom Niveau der ersten Anschlüsse 42, 43 verschieden sein kann. Die verbleibenden zweiten freien Enden $45d_2$, $45e_2$ und $45f_2$ liegen auf dem Niveau der Gruppen 40 und 41. Die zweiten Anschlüsse der Gruppen 38 und 39 sowie der Gruppen 40 und 41 können auf einem gemeinsamen Niveau liegen. Es können aber auch die zweiten Anschlüsse der Gruppen 38 und 39 auf einem gemeinsamen Niveau und die zweiten Anschlüsse der Gruppen 40 und 41 wiederum auf einem gemeinsamen jedoch von den Gruppen 38 und 39 unterschiedlichen Niveau liegen. Es ist weiterhin möglich, innerhalb der Gruppen 38 und 39 bzw. 40 und 41 jeweils einen oder zwei zweite Anschlüsse auf ein abweichendes Niveau zu bringen, vorausgesetzt, dies betrifft jeweils den gleichen zweiten Anschluß jeder Gruppe. So ist es beispielsweise möglich, die Anschlüsse 38a und 39a auf ein gemeinsames Niveau zu bringen, das vom Niveau der Anschlüsse 38b und 38c sowie 39b und 39c verschieden ist.

Im dargestellten Ausführungsbeispiel fluchtet das erste freie Ende $45f_2$ des Verbindungsstückes 45f mit dem ersten Anschluß 42 und stellt eine Verbindung über das zweite freie Ende $45f_2$ mit dem zweiten Anschluß 40a her. Soll der erste Anschluß 42 mit dem zweiten Anschluß 40b verbunden werden, so wird der Wagen 44 um einen Schaltschritt nach rechts verfahren, so daß das erste freie Ende $45e_1$ des Verbindungsstückes 45e mit dem ersten Anschluß 42 fluchtet, wodurch das zweite Ende $45e_2$ mit dem zweiten Anschluß 40b ausgerichtet wird. Soll dann der zweite Anschluß 41a der Gruppe 41 beliefert werden, so wird der Wagen 44 in Richtung des Pfeiles A noch weiter nach rechts gefahren, so daß das erste freie Ende $45f_1$ mit dem ersten Anschluß 43 ausgerichtet ist. In dieser Stellung steht das zweite freie Ende $45f_2$ des Verbindungsstückes 45f mit dem zweiten Anschluß 41a in Verbindung. Die gleichen Vorgänge laufen ab, wenn die zweiten Anschlüsse der Gruppe 38 und 39 beliefert werden sollen. Zum Beliefern beispielsweise des zweiten Anschlusses 39c wird der Wagen 44 soweit nach links verschoben, bis das zweite freie Ende $45c_2$ mit dem ersten Anschluß 43 ausgerichtet ist. In dieser Stellung fluchtet das erste freie Ende 45c mit dem zweiten Anschluß 39c. Soll der zweite Anschluß 38a der Gruppe 38 beliefert werden, so wird der Wagen 44 noch weiter nach links verschoben, bis das zweite freie Ende $45a_2$ des Verbindungsstückes 45a mit dem ersten Anschluß 42 ausgerichtet ist. In dieser Stellung stellt das erste freie Ende $45a_1$ eine Verbindung zum zweiten Anschluß 38a her.

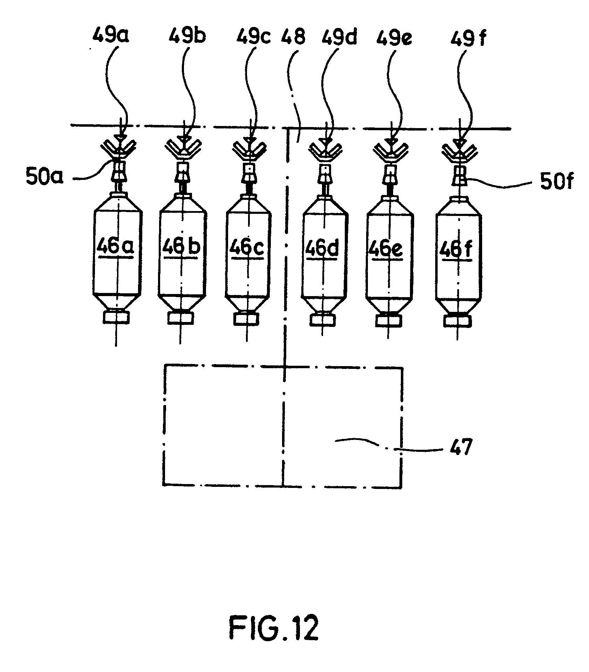

Ein bevorzugtes Anwendungsgebiet der beschriebenen Weichenanordnung liegt nach Fig. 12 in einem Transportsystem zum Transportieren von Spulen 46a bis 46f von einem nicht dagestellten Flyer zu einer Mehrzahl zugeordneter Ringspinnmaschinen, wobei in Fig. 12 ein Höhenschnitt einer derartigen Ringspinnmaschine 47 schematisch dargestellt ist. Die Ringspinnmaschine 47 weist ein Gatter 48 auf, an dem eine Mehrzahl von Schienenwegen 49a bis 49f angeordnet sind, auf denen Förderzüge 50a bis 50f für die Spulen 46 in den Arbeitsbereich der Ringspinnmaschine 47 einlaufen können. Jeder der Schienenwege 49 ist mit einem der zweiten Anschlüsse einer Gruppe 6, 7 oder 35 im Ausführungsbeispiel nach den Fig. 1 bis 3 oder 10 oder mit zwei nebeneinanderliegenden Gruppen 22,23 bzw. 24, 25 oder 30, 31 bzw. 32, 33 oder 38, 39 bzw. 40, 41 in den Ausführungsbeispielen nach den Fig. 7, 8, 9, 11 verbunden. Der seitliche Raum innerhalb des Gatters ist naturgemäß äußerst beschränkt. Durch die erfindungsgemäße Weichenanordnung ist es jedoch möglich, die Schienenwege so eng nebeneinander anzuordnen, daß die Spulen direkt vom Förderzug abgesponnen werden können. Beim Beginn des Spinnens werden dabei zweckmäßigerweise zunächst die inneren Förderzüge 50c und 50d mit vollen Spulen 46 in das Gatter 48 eingefahren und die Lunten der Spulen mit den Spinnstellen verbunden. Ist dies geschehen, werden die Züge 50b und 50e eingefahren und deren Lunten ebenfalls mit den entsprechende Spinnstellen verbunden. Dann werden die äußeren Förderzüge 50a und 50f in das Gatter 48 eingefahren. Nähert sich der Abspinnvorgang von den Spulen 46c bzw. 46d der inneren Förderzüge 50c bzw. 50d dem Ende, d.h. sind die Spulen fast leer, so werden deren Lunten gelöst und dafür die Lunten der Spulen 46a bzw. 46f der äußeren Förderzüge 50a bzw. 50f verwendet. Die beiden inneren Förderzüge 50c bzw. 50d können dann entweder zur gleichen Seite der Ringspinnmaschine oder, wenn die beschriebenen erfindungsgemäßen Weichenanordnungen spiegelbildlich an beiden Seiten der Ringspinnmaschine vorgesehen sind, auf der anderen Seite 47 herausgefahren werden. Das Herausfahren zur anderen Seite der Ringspinnmaschine 47 hat den zusätzlichen Vorteil, daß dabei gleichzeitig ein voller Förderzug 50c bzw. 50d in die Ringspinnmaschine 48 eingefahren werden kann. Sind dann die Spulen 46b bzw. 46e der mittleren Förderzüge leer, so können für die entsprechenden Spinnstellen die vollen Spulen 46b bzw. 46d der inneren Förderzüge verwendet werden.

Muß während des Spinnens beispielsweise das Fadenknüpfgerät oder ein anderes Bedienungsgerät von einer Langseite der Ringspinnmaschine auf die andere Langseite überführt werden, so kann der Wagen der Weichenanordnung zum Räumen des Platzes vor den Schmalseiten der Ringspinnmaschine verfahren werden, so daß das Gerät ungehindert durchlaufen kann. In Abwandlung der beschriebenen und gezeichneten Ausführungsbeispiele ist es möglich, die erfindungsgemäße Weichenanordnung auch beispielsweise für ein Boden-Schienensystem umzugestalten. Die Anzahl der zweiten Anschlüsse pro Gruppe kann entsprechend den Erfordernissen variiert werden. Falls es erforderlich ist, können auch die Anschlüsse innerhalb einer Gruppe wahlweise über zwei erste Anschlüsse versorgt werden. Auch die Anzahl der Verbindungsstücke auf dem Wagen kann variieren. Es ist weiterhin möglich, in einer Weichenanordnung zwei oder mehr Wagen zu verwenden, falls dies zweckmäßig erscheint. Weiterhin kann die Fähigkeit der erfindungsgemäßen Weichenanordnung, Niveauunterschiede zu überbrücken, auch bei Ringspinnmaschinen ausgenutzt werden, bei denen sich nur die zum Abspinnen benötigten Förderzüge im Gatter befinden, während außer- und schräg oberhalb des Gatters lediglich eine Reservestrecke vorgesehen ist, von der Spulen per Hand in das Gatter umgehängt werden können.

## Patentansprüche

1. Weichenanordnung für ein Schienen-Transportsystem insbesondere ein Hängefördersystem, mit einer Mehrzahl erster und einer Mehrzahl zweiter, mit Abstand zueinander angeordneter Schienen-Anschlüsse und mit einer Mehrzahl zwischen den ersten und zweiten Anschlüssen angeordneter, bewegbarer Verbindungsstücke zum wahlweisen Verbinden und Trennen erster und zweiter Anschlüsse, **dadurch gekennzeichnet,** daß die ersten und die zweiten Anschlüsse (2, 3, 19, 20, 21, 28, 29, 34, 42, 43 ; 6, 7, 22, 23, 24, 25, 30, 31, 32, 33, 35, 38, 39, 40, 41) in Gruppen einander zugeordnet sind, und daß eine an die Anzahl zweiter Anschlüsse pro Gruppe (6, 7, 22... 25, 30... 33, 35, 38... 41) angepaßte Anzahl Verbindungsstücke (9a bis 9f, 27a bis 27c, 37a bis 37f, 45a bis 45f) mit zwei freien Enden auf einem Wagen (8, 26, 36, 44) angeordnet sind, der derart verfahrbar ist, daß jeder der zweiten Anschlüsse einer Gruppe mit jedem der Gruppe zugeordneten ersten Anschluß verbindbar ist.

2. Weichenanordnung nach Anspruch 1, **dadurch gekennzeichnet,** daß jede Gruppe (6, 7, 22... 25, 30... 33, 38... 41) die gleiche Anzahl zweiter Anschlüsse aufweist.

3. Weichenanordnung nach einem der Ansprüche 1 oder 2, **dadurch gekennzeichnet,** daß eine der Anzahl der zweiten Anschlüsse der Gruppe (6, 7, 22... 25, 30... 33, 35) entsprechende Anzahl Verbindungsstücke (9a bis 9f, 27a bis 27c, 37a bis 37f) auf dem Wagen (8, 26, 36) fest angeordnet ist.

4. Weichenanordnung nach einem der Ansprüche 1 bis 3, **dadurch gekennzeichnet,** daß jeder Gruppe (6, 7, 22... 25, 30... 33, 35, 38... 41) zweiter Anschlüsse ein einziger erster Anschluß (2, 3, 19, 20, 21, 28, 29, 34, 42, 43) zugeordnet ist.

5. Weichenanordnung nach einem der Ansprüche 1 bis 4, **dadurch gekennzeichnet,** daß einer Gruppe (30, 31) eine Mehrzahl erster Anschlüsse (28, 29, 28′, 29′) zugeordnet ist.

6. Weichenanordnung nach einem der Ansprüche 1 bis 5, **dadurch gekennzeichnet,** daß die Verbindungsstücke (9a bis 9f) derart auf dem Wagen (8) angeordnet sind, daß die freien Enden jedes Verbindungsstückes (9) an gegenüberliegenden Seiten des Wagens (8) münden.

7. Weichenanordnung nach einem der Ansprüche 1 bis 5, **dadurch gekennzeichnet,** daß die Verbindungsstücke (27a bis 27c, 37a bis 37f, 45a bis 45f) derart auf dem Wagen (26, 36, 44) angeordnet sind, daß die freien Enden jedes Verbindungsstückes an der gleichen Seite des Wagens münden.

8. Weichenanordnung nach einem der Ansprüche 1 bis 7, **dadurch gekennzeichnet,** daß zum Ausgleich von Niveauunterschieden zwischen dem ersten und mindestens einem zweiten Anschluß (2, 3, 34, 42, 43 ; 6a bis 6f, 7a bis 7f, 35a bis 35f, 38a bis 38c, 41a bis 41c) das diesem zweiten Anschluß zugeordnete Verbindungsstück (9a bis 9f, 37a bis 37f, 45a bis 45f) schräggeführt ist.

9. Weichenanordnung nach einem der Ansprüche 1 bis 8, **dadurch gekennzeichnet,** daß der erste Anschluß (2, 3) über eine Abzweigung und eine Einmündung (4, 5) mit einer Hauptstrecke (1) verbunden ist.

10. Weichenanordnung nach einem der Ansprüche 1 bis 9, **dadurch gekennzeichnet,** daß der Wagen (8, 26, 36, 44) über ein Zahnstangengetriebe (16, 17, 18) angetrieben ist.

11. Weichenanordnung nach einem der Ansprüche 1 bis 10, **dadurch gekennzeichnet,** daß die Steuerung des Wagens (8, 26, 36, 44) über einen Inkrementalgeber erfolgt.

12. Weichenanordnung nach einem der Ansprüche 1 bis 11, **gekennzeichnet, durch** ihre Verwendung in einem Transportsystem für eine Ringspinnmaschine (47) mit direkt in den Arbeitsbereich der Ringspinnmaschine (47) einlaufenden Schienenwegen (49), auf denen Spulen (46) herangeführt werden.

## Claims

1. Switch arrangement for a rail transport system, especially an overhead conveyor system, with a plurality of first and a plurality of second rail junctions arranged with a mutual spacing and with a plurality of movable connection pieces arranged between the first and second junctions for the selective connection and disconnection of first and second junctions, characterised in that the first and the second junctions (2, 3, 19, 20, 21, 28, 29, 34, 42, 43 ; 6, 7, 22, 23, 24, 25, 30, 31, 32, 33, 35, 38, 39, 40, 41) are assigned in groups, to one another, and in that a number of connection pieces (9a to 9f, 27a to 27c, 37a to 37f, 45a to 45f) with two free ends, which matches the number of second junctions per group (6, 7, 22... 25, 30... 33, 35, 38... 41), is arranged on a carriage (8, 26, 36, 44) which is movable in such a way that each of the second junctions of a group can be connected to each first junction assigned to the group.

2. Switch arrangement according to Claim 1, characterised in that each group (6, 7, 22... 25, 30... 33, 38... 41) has the same number of second junctions.

3. Switch arrangement according to one of Claims 1 or 2, characterised in that a number of connection pieces (9a to 9f, 27a to 27c, 37a to 37f) which corresponds to the number of second junctions of the group (6, 7, 22... 25, 30... 33, 35) is arranged fixedly on the carriage (8, 26, 36).

4. Switch arrangement according to one of Claims 1 to 3, characterised in that each group (6, 7, 22... 25, 30... 33, 35, 38...41) of second junctions is assigned a single first junction (2, 3, 19, 20, 21, 28, 29, 34, 42, 43).

5. Switch arrangement according to one of Claims 1 to 4, characterised in that a group (30, 31) is assigned a plurality of first junctions (28, 29, 28', 29').

6. Switch arrangement according to one of Claims 1 to 5, characterised in that the connection pieces (9a to 9f) are so arranged on the carriage (8) that the free ends of each connection piece (9) come out on opposite sides of the carriage (8).

7. Switch arrangement according to one of Claims 1 to 5, characterised in that the connection pieces (27a to 27c, 37a to 37f, 45a to 45f) are so arranged on the carriage (26, 36, 44) that the free ends of each connection piece come out on the same side of the carriage.

8. Switch arrangement according to one of Claims 1 to 7, characterised in that, to compensate level differences between the first and at least one second junction (2, 3, 34, 42, 43 ; 6a to 6f, 7a to 7f, 35a to 35f, 38a to 38c, 41a to 41c), the connection piece (9a to 9f, 37a to 37f, 45a to 45f) assigned to this second junction is guided obliquely.

9. Switch arrangement according to one of Claims 1 to 8, characterised in that the first junction (2, 3) is connected to a main line (1) via a branch and a spur (4, 5).

10. Switch arrangement according to one of Claims 1 to 9, characterised in that the carriage (8, 26, 36, 44) is driven via a rack-and-pinion mechanism (16, 17, 18).

11. Switch arrangement according to one of Claims 1 to 10, characterised in that the carriage (8, 26, 36, 44) is controlled via an incremental transmitter.

12. Switch arrangement according to one of Claims 1 to 11, characterised by its use in a transport system for a ring spinning machine (47) with rail lines (49) which run directly into the working range of the ring spinning machine (47) and on which bobbins (46) are supplied.

## Revendications

1. Agencement d'aiguillage pour un système de transport sur rails, un système de transport aérien notamment, avec une série de premiers embranchements et d'embranchements secondaires, disposés à une certaine distance mutuelle, et avec une série de raccords mobiles, disposés entre les premiers embranchements et les embranchements secondaires, en vue de les relier ou de les séparer, caractérisé en ce que les premiers embranchements et les embranchements secondaires (2, 3, 19, 20, 21, 28, 29, 34, 42, 43 ; 6, 7, 22, 23, 24, 25, 30, 31, 32, 33, 35, 38, 39, 40, 41) sont associés par groupes, et en ce qu'un nombre de raccords (9a à 9f, 27a à 27c, 37a à 37f, 45a à 45f) avec deux extrémités libres, adapté au nombre d'embranchements secondaires par groupe (6, 7, 22... 25, 30... 33, 35, 38... 41), est disposé sur un chariot (8, 26, 36, 44), qui peut être déplacé, de telle sorte que chacun des embranchements secondaires d'un groupe peut être relié à chaque premier raccordement, associé au groupe.

2. Agencement d'aiguillage suivant la revendication 1, caractérisé en ce que chaque groupe (6, 7, 22... 25, 30... 33, 38... 41) présente le même nombre d'embranchements secondaires.

3. Agencement d'aiguillage suivant l'une quelconque des revendications 1 et 2, caractérisé en ce qu'un nombre de raccords (9a à 9f, 27a à 27c, 37a à 37f), correspondant au nombre d'embranchements secondaires du groupe (6, 7, 22... 25, 30... 33, 35), est fixé sur le chariot (8, 26, 36).

4. Agencement d'aiguillage suivant l'une quelconque des revendications 1 à 3, caractérisé en ce qu'un premier embranchement unique (2, 3, 19, 20, 21, 28, 29, 34, 42, 43) est associé à chaque groupe (6, 7, 22... 25, 30... 33, 35, 38... 41) d'embranchements secondaires.

5. Agencement d'aiguillage suivant l'une quelconque des revendications 1 à 4, caractérisé en ce qu'une série de premiers embranchements (28, 29, 28′, 29′) est associée à un groupe (30, 31).

6. Agencement d'aiguillage suivant l'une quelconque des revendications 1 à 5, caractérisé en ce que les raccords (9a à 9f) sont disposés sur le chariot (8), de telle sorte que les extrémités libres de chaque raccord (9) débouchent sur des côtés opposés du chariot (8).

7. Agencement d'aiguillage suivant l'une quelconque des revendications 1 à 5, caractérisé en ce que les raccords (27a à 27c, 37a à 37f, 45a à 45f) sont disposés sur le chariot (26, 36, 44), de telle sorte que les extrémités libres de chaque raccord débouchent sur le même côté du chariot.

8. Agencement d'aiguillage suivant l'une quelconque des revendications 1 à 7, caractérisé en ce que, en vue de compenser des différences de niveau entre le premier embranchement et un embranchement secondaire, au moins (2, 3, 34, 42, 43 ; 6a à 6f, 7a à 7f, 35a à 35f, 38a à 38c, 41a à 41c), le raccord (9a à 9f, 37a à 37f, 45a à 45f), associé à cet embranchement secondaire, est orienté à l'oblique.

9. Agencement d'aiguillage suivant l'une quelconque des revendications 1 à 8, caractérisé en ce que le premier embranchement (2, 3) est relié à une voie principale (1), par l'intermédiaire d'un départ et d'une arrivée (4, 5).

10. Agencement d'aiguillage suivant l'une quelconque des revendications 1 à 9, caractérisé en ce que le chariot (8, 26, 36, 44) est entraîné par l'intermédiaire d'un engrenage à crémaillère (16, 17, 18).

11. Agencement d'aiguillage suivant l'une quelconque des revendications 1 à 10, caractérisé en ce que le chariot (8, 26, 36, 44) est commandé par l'intermédiaire d'un capteur incrémentiel.

12. Agencement d'aiguillage suivant l'une quelconque des revendications 1 à 11, caractérisé par son utilisation dans un système de transport pour un métier continu à anneaux (47), avec des voies ferrées (49), qui pénètrent directement dans la zone de travail du métier (47), et sur lesquelles sont amenées des bobines (46).

FIG.1

FIG.2

FIG.3

FIG.4

FIG.5

FIG.6

FIG.7

FIG.8

FIG.9

FIG.10

FIG.11

FIG.12